# EUROPÄISCHE PATENTANMELDUNG

(11) **EP 3 862 203 A1**
(43) Veröffentlichungstag der Anmeldung: **11.08.2021**
(21) Anmeldenummer: 20156173.5
(22) Anmeldetag: 07.02.2020
(51) Int. Cl.: B60J 10/30, B60J 10/84, B60P 3/32, E06B 1/32, E06B 1/60

(54) **BASISPROFIL-VORRICHTUNG FÜR AUSSENANBAUTEILE VON FEIZEIT- UND SONDERFAHRZEUGEN**

(71) Anmelder: Adhesive+ e.K., 88416 Ochsenhausen (DE)
(72) Erfinder:
(74) Vertreter: Kiessling, Christian

(57) **Zusammenfassung**

Bei einer Basisprofil-Vorrichtung (100) für Außenanbauteile von Freizeit- und Sonderfahrzeugen, mit einem im Bereich einer Stirnfläche (211) einer Fahrzeugwand (210) sowie gegebenenfalls im Bereich einer Stirnfläche (221) eines bezüglich der Fahrzeugwand (210) schwenkbar angeordneten Schwenkelementes (220) wie einem Fenster oder einer Türe des Fahrzeuges angeordneten Rahmenprofil (105), das mit einem ersten Ansatzelement zum Kontaktieren einer Innenfläche (219) einer Fahrzeugwand (210) bzw. eines Schwenkelementes (220) sowie mit einem dem ersten Ansatzelement gegenüberstehenden zweiten Ansatzelement zum Kontaktieren einer Außenfläche (212) einer Fahrzeugwand (210) bzw. eines Schwenkelementes (220) versehen ist, wird eine formschlüssige Fixierung an einer Stirnfläche (211) einer Fahrzeugwand (210) bzw. an der Stirnfläche (221) eines bezüglich der Fahrzeugwand (210) schwenkbar angeordneten Schwenkelementes (220) dadurch erreicht, dass das erste Ansatzelement einen Rahmenansatzkörper (129) sowie einen damit fest verbindbaren Befestigungskörper (130) enthält, der formschlüssig in eine entsprechend ausgeformte Aufnahmekammer (101) des Rahmenprofils (105) einführbar ist.

## Beschreibung

Die Erfindung betrifft eine Basisprofil-Vorrichtung für Außenanbauteile von Freizeit- und Sonderfahrzeugen sowie von Wasserfahrzeugen jeglicher Art, mit einem im Bereich einer Stirnfläche einer Fahrzeugwand sowie gegebenenfalls im Bereich einer Stirnfläche eines bezüglich der Fahrzeugwand schwenkbar angeordneten Schwenkelementes oder verschiebbar angeordneten Hubelementes wie einem Fenster oder einer Türe des Fahrzeuges angeordneten Rahmenprofil, das mit einem ersten Ansatzelement zum Kontaktieren einer Innenfläche einer Fahrzeugwand bzw. eines Schwenkelementes sowie mit einem dem ersten Ansatzelement gegenüberstehenden zweiten Ansatzelement zum Kontaktieren einer Außenfläche einer Fahrzeugwand bzw. eines Schwenkelementes versehen ist.

Basisprofil-Vorrichtungen der eingangs genannten Art werden im Stand der Technik verwendet, um Verbindungen zwischen einer Fahrzeugwand und einem Schwenkelement herzustellen. Die bekannten Basisprofil-Vorrichtungen weisen indes den Nachteil auf, dass sie mit Hilfe von betreffenden Oberflächen durchbrechenden und betreffenden Oberflächen verformenden kraftschlüssigen Verbindungselementen an betreffenden Grundstrukturen zu befestigen sind.

Aufgabe der Erfindung ist es deshalb, eine Basisprofil-Vorrichtung zu schaffen, die formschlüssig bzw. stoffschlüssig an einer betreffenden Stirnfläche einer Fahrzeugwand bzw. an der Stirnfläche eines bezüglich der Fahrzeugwand schwenkbar angeordneten Schwenkelementes robust anbringbar ist.

Für eine Basisprofil-Vorrichtung der eingangs genannten Art wird diese Aufgabe erfindungsgemäß dadurch gelöst, dass das erste Ansatzelement einen Rahmenansatzkörper sowie einen damit fest verbindbaren Befestigungskörper enthält, der formschlüssig in eine entsprechend ausgeformte Aufnahmekammer des Rahmenprofils einführbar ist.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Basisprofil-Vorrichtung wird mit Hilfe der Merkmalskombination, dass das erste Ansatzelement einen Rahmenansatzkörper sowie einen damit fest verbindbaren Befestigungskörper enthält, der formschlüssig in eine entsprechend ausgeformte Aufnahmekammer des Rahmenprofils einführbar ist, eine robuste formschlüssige Fixierbarkeit eines Rahmenprofils an eine Stirnfläche einer Fahrzeugwand bzw. an eine Stirnfläche eines bezüglich der Fahrzeugwand schwenkbar angeordneten Schwenkelementes erreicht.

Gemäß einer ersten bevorzugten Ausführungsform der erfindungsgemäßen Basisprofil-Vorrichtung ist vorgesehen, dass das Rahmenprofil doppelwandig ausgeführt ist, wobei eine an eine Stirnfläche der Fahrzeugwand bzw. des Schwenkelementes angrenzende Rahmenprofil-Innenwandung mittels eines Verbindungsschenkels mit einer im Wesentlichen parallel zur Rahmenprofil-Innenwandung angeordneten Rahmenprofil-Außenwandung verbunden ist.

Gemäß einer wichtigen bevorzugten Ausführungsform der erfindungsgemäßen Basisprofil-Vorrichtung ist die Aufnahmekammer des Rahmenprofils als zwischen der Rahmenprofil-Innenwandung und der Rahmenprofil-Außenwandung ausgebildeter Hohlraum ausgeführt, der eine im Bereich einer ersten Seite des Rahmenprofils ausgebildete Öffnung aufweist.

Der Befestigungskörper des ersten Ansatzelementes ist insbesondere formschlüssig in die Aufnahmekammer einfügbar. Zu diesem Zweck kann die Innenwandung der Aufnahmekammer beispielsweise mit einer Riffelung versehen sein, die komplementär zu einer am Befestigungskörper des ersten Ansatzelementes ausgebildeten Riffelung ausgeführt ist.

Gemäß einer anderen bevorzugten Ausführungsform der erfindungsgemäßen Basisprofil-Vorrichtung weist der Rahmenansatzkörper des ersten Ansatzelements eine plan ausgebildete Ansatzfläche auf, die bei vollständig in die Aufnahmekammer des Rahmenprofils eingeführtem Befestigungskörper des ersten Ansatzelementes schlüssig an die Innenfläche des Fahrzeugwand bzw. des Schwenkelementes angrenzt.

Das Rahmenprofil ist vorzugsweise aus einem Metall hergestellt und das erste Ansatzelement ist vorzugsweise aus einem hart-elastischen Kunststoffmaterial hergestellt.

Gemäß einer weiteren bevorzugten Ausführungsform der erfindungsgemäßen Basisprofil-Vorrichtung ist das zweite Ansatzelement im Bereich einer zweiten Seite des Rahmenprofils angeordnet und dabei fluchtend mit der entsprechenden Seitenfläche des Rahmenprofils ausgebildet.

Das zweite Ansatzelement ist vorzugsweise unter Ausbildung eines definierten Zwischenraumes in vorgegebenem Abstand parallel zur Außenfläche einer Fahrzeugwand bzw. eines Schwenkelementes angeordnet, wobei der Zwischenraum insbesondere mit einem zwecks Verhinderung eines Eindringens von Feuchtigkeit und zum Ausgleich von Verformungskräften jeglicher Art zumindest teilweise mit einem mit mindestens einer, vorzugsweise doppelseitigen Klebeschicht versehenem Haftklebeband ausgefüllt ist.

Ferner ist ein freies Ende des zweiten Ansatzelementes vorzugsweise in Richtung auf die Innenfläche einer Fahrzeugwand bzw. eines Schwenkelementes zu gebogen.

Des Weiteren ist die Rahmenprofil-Innenwandung zwecks Erhöhung der Elastizität vorzugsweise mit mindestens einer Aussparung versehen.

Die erfindungsgemäße Basisprofil-Vorrichtung wird im Folgenden anhand einer bevorzugten Ausführungsform erläutert, die in den Figuren der Zeichnung dargestellt ist. Darin zeigt:

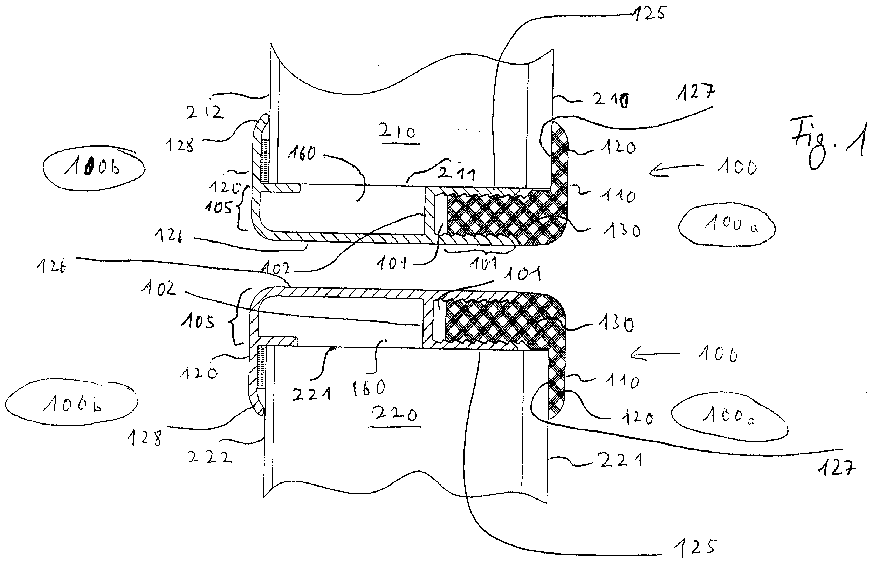

- Fig. 1: eine bevorzugte Ausführungsform der erfindungsgemäßen Vorrichtung in einer Querschnittsansicht.

Die in Figur 1 dargestellte erfindungsgemäße Basisprofil-Vorrichtung 100 für Außenanbauteile von Freizeit- und Sonderfahrzeugen ein im Bereich einer Stirnfläche 211 einer Fahrzeugwand 210 sowie gegebenenfalls im Bereich einer Stirnfläche 221 eines bezüglich der Fahrzeugwand 210 schwenkbar angeordneten Schwenkelementes 220 angeordnetes Rahmenprofil 105, das mit einem ersten Ansatzelement 110 zum Kontaktieren einer Innenfläche 219 einer Fahrzeugwand 210 bzw. eines Schwenkelementes 220 sowie mit einem dem ersten Ansatzelement 110 gegenüberstehenden zweiten Ansatzelement 120 zum Kontaktieren einer Außenfläche 212 einer Fahrzeugwand 210 bzw. eines Schwenkelementes 220 versehen ist.

Das erste Ansatzelement 110 enthält dabei einen Rahmenansatzkörper 129 sowie einen damit verbundenen Befestigungskörper 130, der formschlüssig in eine entsprechend ausgeformte Aufnahmekammer 101 des Rahmenprofils 105 einführbar ist.

Das Rahmenprofil 105 ist doppelwandig ausgeführt, wobei eine an eine Stirnfläche 211 der Fahrzeugwand 210 bzw. des Schwenkelementes 220 angrenzende Rahmenprofil-Innenwandung 125 mittels eines Verbindungsschenkels mit einer im Wesentlichen parallel zur Rahmenprofil-Innenwandung 125 angeordneten Rahmenprofil-Außenwandung verbunden ist.

Die Aufnahmekammer 101 des Rahmenprofils 105 ist als zwischen der Rahmenprofil-Innenwandung 125 und der Rahmenprofil-Außenwandung ausgebildeter Hohlraum ausgeführt, der eine im Bereich einer ersten Seite 100a des Rahmenprofils 105 ausgebildete Öffnung aufweist.

Die Innenwandung der Aufnahmekammer 101 ist mit einer Riffelung versehen, die komplementär zu einer am Befestigungskörper 130 des ersten Ansatzelementes 110 ausgebildeten Riffelung ausgeführt ist.

Der Rahmenansatzkörper 129 des ersten Ansatzelements 110 weist eine plan ausgebildete Ansatzfläche 127 auf, die bei vollständig in die Aufnahmekammer 101 des Rahmenprofils 105 eingeführtem Befestigungskörper 130 des ersten Ansatzelementes 120 schlüssig an die Innenfläche 219 des Fahrzeugwand 210 bzw. des Schwenkelementes 220 angrenzt.

Das Rahmenprofil 105 ist dabei aus einem Metall und das erste Ansatzelement 110 ist aus einem hart-elastischen Kunststoffmaterial hergestellt.

Das zweite Ansatzelement 120 ist im Bereich einer zweiten Seite 100b des Rahmenprofils 105 angeordnet und ist dabei fluchtend mit der entsprechenden Seitenfläche des Rahmenprofils 105 ausgebildet.

Das zweite Ansatzelement 120 ist unter Ausbildung eines definierten Zwischenraumes 140 in vorgegebenem Abstand parallel zur Außenfläche 212 einer Fahrzeugwand 210 bzw. eines Schwenkelementes 220 angeordnet, wobei der Zwischenraum 140 mit einem beidseitig zwecks Verhinderung eines Eindringens von Feuchtigkeit vollständig mit einer Klebeschicht versehenem Haftklebeband 141 ausgefüllt ist.

Ein freies Ende 128 des zweiten Ansatzelementes 120 ist in Richtung auf die Innenfläche 219 einer Fahrzeugwand 210 bzw. eines Schwenkelementes 220 zu gebogen.

Die Rahmenprofil-Innenwandung 125 ist zwecks Erhöhung der Elastizität mit mindestens einer Aussparung 160 versehen.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

### Bezugszeichenliste

- 100: Basisprofil-Vorrichtung
- 100a: erste Seite des Rahmenprofils
- 100b: zweite Seite des Rahmenprofils
- 101: Aufnahmekammer
- 102: Verbindungs-Schenkel
- 105: Rahmenprofil
- 110: erstes Ansatzelement
- 120: zweites Ansatzelement
- 125: Rahmenprofil-Innenwandung
- 126: Rahmenprofil-Außenwandung
- 127: Ansatzfläche
- 128: freies Ende
- 129: Rahmenansatzkörper
- 130: Befestigungskörper
- 140: Zwischenraum
- 141: Haftklebeband
- 160: Aussparung
- 210: Fahrzeugwand
- 211: Stirnfläche des Fahrzeugteils
- 221: Stirnfläche des Schwenkelementes
- 219: Innenfläche des Fahrzeugteils
- 229: Innenfläche des Schwenkelementes
- 212: Außenfläche einer Fahrzeugwand
- 220: Schwenkelement
- 222: Außenfläche eines Schwenkelementes

## Patentansprüche

1. Basisprofil-Vorrichtung (100) für Außenanbauteile von Freizeit- und Sonderfahrzeugen, mit einem im Bereich einer Stirnfläche (211) einer Fahrzeugwand (210) sowie gegebenenfalls im Bereich einer Stirnfläche (221) eines bezüglich der Fahrzeugwand (210) schwenkbar angeordneten Schwenkelementes (220) oder verschiebbar angeordneten Hubelementes wie einem Fenster oder einer Türe des Fahrzeuges angeordneten Rahmenprofil (105), das mit einem ersten Ansatzelement (110) zum Kontaktieren einer Innenfläche (219) einer Fahrzeugwand (210) bzw. der Innenfläche (229) eines Schwenkelementes (220) sowie mit einem dem ersten Ansatzelement (110) gegenüberstehenden zweiten Ansatzelement (120) zum Kontaktieren einer Außenfläche (212) einer Fahrzeugwand (210) bzw. der Außenfläche (222) eines Schwenkelementes (220) versehen ist, **dadurch gekennzeichnet, dass** das erste Ansatzelement (110) einen Rahmenansatzkörper (129) sowie einen damit fest verbindbaren Befestigungskörper (130) enthält, der formschlüssig in eine entsprechend ausgeformte Aufnahmekammer (101) des Rahmenprofils (100) einführbar ist.

2. Basisprofil-Vorrichtung (100) nach Anspruch 1, **dadurch gekennzeichnet, dass** das Rahmenprofil (105) doppelwandig ausgeführt ist, wobei eine an eine Stirnfläche (221) der Fahrzeugwand (210) bzw. des Schwenkelementes (220) angrenzende Rahmenprofil-Innenwandung (125) mittels eines Verbindungs-Schenkels (102) mit einer im Wesentlichen parallel zur Rahmenprofil-Innenwandung (125) angeordneten Rahmenprofil-Außenwandung (126) verbunden ist.

3. Basisprofil-Vorrichtung (100) nach Anspruch 2, **dadurch gekennzeichnet, dass** die Aufnahmekammer (101) des Rahmenprofils (105) als zwischen der Rahmenprofil-Innenwandung (125) und der Rahmenprofil-Außenwandung (126) ausgebildeter Hohlraum ausgeführt ist, der eine im Bereich einer ersten Seite (100a) des Rahmenprofils (105) ausgebildete Öffnung aufweist.

4. Basisprofil-Vorrichtung (100) nach Anspruch 3, **dadurch gekennzeichnet, dass** der Befestigungskörper (130) des ersten Ansatzelementes (110) formschlüssig in die Aufnahmekammer (101) einfügbar ist.

5. Basisprofil-Vorrichtung (100) nach einem der Ansprüche 3 oder 4, **dadurch gekennzeichnet, dass** die Innenwandung der Aufnahmekammer (101) mit einer Riffelung versehen ist, die komplementär zu einer am Befestigungskörper (130) des ersten Ansatzelementes (110) ausgebildeten Riffelung ausgeführt ist.

6. Basisprofil-Vorrichtung (100) nach einem der vorhergehenden Ansprüche, **dadurch gekennzeichnet, dass** der Rahmenansatzkörper (129) des ersten Ansatzelements (110) eine plan ausgebildete Ansatzfläche (127) aufweist, die bei vollständig in die Aufnahmekammer (101) des Rahmenprofils (105) eingeführtem Befestigungskörper (130) des ersten Ansatzelementes (110) schlüssig an die Innenfläche (219) des Fahrzeugwand (210) bzw. des Schwenkelementes (220) angrenzt.

7. Basisprofil-Vorrichtung (100) nach einem der vorhergehenden Ansprüche, **dadurch gekennzeichnet, dass** das Rahmenprofil (105) aus einem Metall und das erste Ansatzelement (110) aus einem hart-elastischen Kunststoffmaterial hergestellt ist.

8. Basisprofil-Vorrichtung (100) nach einem der vorhergehenden Ansprüche, **dadurch gekennzeichnet, dass** das zweite Ansatzelement (120) im Bereich einer zweiten Seite (110b) des Rahmenprofils (105) angeordnet ist und fluchtend mit der entsprechenden Seitenfläche des Rahmenprofils (105) ausgebildet ist.

9. Basisprofil-Vorrichtung (100) nach Anspruch 8, **dadurch gekennzeichnet, dass** das zweite Ansatzelement (120) unter Ausbildung eines definierten Zwischenraumes (140) in vorgegebenem Abstand parallel zur Außenfläche (212) einer Fahrzeugwand (210) bzw. eines Schwenkelementes (220) angeordnet ist.

10. Basisprofil-Vorrichtung (100) nach Anspruch 9, **dadurch gekennzeichnet, dass** der Zwischenraum (140) mit einem zwecks Verhinderung eines Eindringens von Feuchtigkeit und zum Ausgleich von Verformungskräften jeglicher Art zumindest teilweise mit einem mit mindestens einer Klebeschicht versehenem Haftklebeband (141) ausgefüllt ist.

11. Basisprofil-Vorrichtung (100) nach einem der Ansprüche 8 bis 10, **dadurch gekennzeichnet, dass** ein freies Ende (128) des zweiten Ansatzelementes (120) in Richtung auf die Innenfläche (219) einer Fahrzeugwand (210) bzw. eines Schwenkelementes (220) zu gebogen ist.

12. Basisprofil-Vorrichtung (100) nach einem der Ansprüche 2 bis 11, **dadurch gekennzeichnet, dass** die Rahmenprofil-Innenwandung (125) zwecks Erhöhung der Elastizität mit mindestens einer Aussparung (160) versehen ist.

## Geänderte Patentansprüche

### Geänderte Patentansprüche gemäss Regel 137(2) EPÜ.

1. Basisprofil-Vorrichtung (100) für Außenanbauteile von Freizeit- und Sonderfahrzeugen, mit einem im Bereich einer Stirnfläche (211) einer Fahrzeugwand (210) sowie gegebenenfalls im Bereich einer Stirnfläche (221) eines bezüglich der Fahrzeugwand (210) schwenkbar angeordneten Schwenkelementes (220) oder verschiebbar angeordneten Hubelementes wie einem Fenster oder einer Türe des Fahrzeuges angeordneten Rahmenprofil (105), das mit einem ersten Ansatzelement (110) zum Kontaktieren einer Innenfläche (219) einer Fahrzeugwand (210) bzw. der Innenfläche (229) eines Schwenkelementes (220) sowie mit einem dem ersten Ansatzelement (110) gegenüberstehenden zweiten Ansatzelement (120) zum Kontaktieren einer Außenfläche (212) einer Fahrzeugwand (210) bzw. der Außenfläche (222) eines Schwenkelementes (220) versehen ist, wobei das erste Ansatzelement (110) einen Rahmenansatzkörper (129) sowie einen damit fest verbindbaren Befestigungskörper (130) enthält, der formschlüssig in eine entsprechend ausgeformte Aufnahmekammer (101) des Rahmenprofils (100) einführbar ist, **dadurch gekennzeichnet, dass**
- das zweite Ansatzelement (120) im Bereich einer zweiten Seite (110b) des Rahmenprofils (105) angeordnet ist und fluchtend mit der entsprechenden Seitenfläche des Rahmenprofils (105) ausgebildet ist und
- unter Ausbildung eines definierten Zwischenraumes (140) in vorgegebenem Abstand parallel zur Außenfläche (212) einer Fahrzeugwand (210) bzw. eines Schwenkelementes (220) angeordnet ist, wobei
- der Zwischenraum (140) mit einem zwecks Verhinderung eines Eindringens von Feuchtigkeit und zum Ausgleich von Verformungskräften jeglicher Art zumindest teilweise mit einem mit mindestens einer Klebeschicht versehenem Haftklebeband (141) ausgefüllt ist.

2. Basisprofil-Vorrichtung (100) nach Anspruch 1, **dadurch gekennzeichnet, dass** das Rahmenprofil (105) doppelwandig ausgeführt ist, wobei eine an eine Stirnfläche (221) der Fahrzeugwand (210) bzw. des Schwenkelementes (220) angrenzende Rahmenprofil-Innenwandung (125) mittels eines Verbindungs-Schenkels (102) mit einer im Wesentlichen parallel zur Rahmenprofil-Innenwandung (125) angeordneten Rahmenprofil-Außenwandung (126) verbunden ist.

3. Basisprofil-Vorrichtung (100) nach Anspruch 2, **dadurch gekennzeichnet, dass** die Aufnahmekammer (101) des Rahmenprofils (105) als zwischen der Rahmenprofil-Innenwandung (125) und der Rahmenprofil-Außenwandung (126) ausgebildeter Hohlraum ausgeführt ist, der eine im Bereich einer ersten Seite (100a) des Rahmenprofils (105) ausgebildete Öffnung aufweist.

4. Basisprofil-Vorrichtung (100) nach Anspruch 3, **dadurch gekennzeichnet, dass** der Befestigungskörper (130) des ersten Ansatzelementes (110) formschlüssig in die Aufnahmekammer (101) einfügbar ist.

5. Basisprofil-Vorrichtung (100) nach einem der Ansprüche 3 oder 4, **dadurch gekennzeichnet, dass** die Innenwandung der Aufnahmekammer (101) mit einer Riffelung versehen ist, die komplementär zu einer am Befestigungskörper (130) des ersten Ansatzelementes (110) ausgebildeten Riffelung ausgeführt ist.

6. Basisprofil-Vorrichtung (100) nach einem der vorhergehenden Ansprüche, **dadurch gekennzeichnet, dass** der Rahmenansatzkörper (129) des ersten Ansatzelements (110) eine plan ausgebildete Ansatzfläche (127) aufweist, die bei vollständig in die Aufnahmekammer (101) des Rahmenprofils (105) eingeführtem Befestigungskörper (130) des ersten Ansatzelementes (110) schlüssig an die Innenfläche (219) des Fahrzeugwand (210) bzw. des Schwenkelementes (220) angrenzt.

7. Basisprofil-Vorrichtung (100) nach einem der vorhergehenden Ansprüche, **dadurch gekennzeichnet, dass** das Rahmenprofil (105) aus einem Metall und das erste Ansatzelement (110) aus einem hart-elastischen Kunststoffmaterial hergestellt ist.

8. Basisprofil-Vorrichtung (100) nach einem der vorhergehenden Ansprüche, **dadurch gekennzeichnet, dass** ein freies Ende (128) des zweiten Ansatzelementes (120) in Richtung auf die Innenfläche (219) einer Fahrzeugwand (210) bzw. eines Schwenkelementes (220) zu gebogen ist.

9. Basisprofil-Vorrichtung (100) nach einem der Ansprüche 2 bis 11, **dadurch gekennzeichnet, dass** die Rahmenprofil-Innenwandung (125) zwecks Erhöhung der Elastizität mit mindestens einer Aussparung (160) versehen ist.
